# EUROPÄISCHE PATENTSCHRIFT

(11) **EP 4 481 516 B1**
(45) Veröffentlichungstag und Bekanntmachung des Hinweises auf die Patenterteilung: **19.08.2026**
(21) Anmeldenummer: 23181251.2
(22) Anmeldetag: 23.06.2023
(51) Int. Cl.: G05B 19/042

(54) **REDUNDANTES AUTOMATISIERUNGSSYSTEM UND VERFAHREN ZUM BETRIEB**
REDUNDANT AUTOMATION SYSTEM AND METHOD FOR OPERATING
SYSTÈME D'AUTOMATISATION REDONDANT ET PROCÉDÉ DE FONCTIONNEMENT

(43) Veröffentlichungstag der Anmeldung: 25.12.2024
(73) Patentinhaber: Siemens Aktiengesellschaft, 80333 München (DE)
(72) Erfinder: Grosch, Thomas, 90574 Roßtal (DE); Renschler, Albert, 76275 Ettlingen (DE)
(74) Vertreter: Siemens Patent Attorneys

(56) Entgegenhaltungen:
- EP-B1- 2 657 797
- EP-B1- 2 667 269
- CN-A- 113 779 148

## Beschreibung

Die Erfindung betrifft ein Redundantes Automatisierungssystem umfassend ein erstes Teilsystem und ein zweites Teilsystem, welche zur Steuerung eines technischen Prozesses jeweils ein Steuerprogramm aufweisen und identisch ausgestaltet sind, wobei zwischen dem ersten Teilsystem und dem zweiten Teilsystem eine Synchronisationsverbindung vorhanden ist, wobei im ersten Teilsystem Zustandsinformationen gespeichert sind, welche statische Konfigurationsdaten und dynamische Laufzeitdaten umfassen, wobei das erste Teilsystem ein erstes Datenabgleichmittel ausgestaltet zum Datenabgleich der Zustandsinformationen des ersten Teilsystems mit Zustandsinformationen des zweiten Teilsystems aufweist, wobei das zweite Teilsystem ein zweites Datenabgleichmittel aufweist.

Im Automatisierungsumfeld werden verstärkt hochverfügbare Lösungen (H-Systeme) gefordert, welche geeignet sind, eventuell auftretende Stillstandszeiten einer Anlage auf ein Minimum zu reduzieren. Die Entwicklung derartiger hochverfügbarer Lösungen ist sehr kostenintensiv, wobei ein im Automatisierungsumfeld gewöhnlich eingesetztes H-System sich dadurch auszeichnet, dass zwei oder mehrere Teilsysteme in Form von Automatisierungsgeräten oder Rechnersystemen über eine Synchronisationsverbindung miteinander gekoppelt sind. Auf die an dieses H-System angeschlossenen Peripherieeinheiten können prinzipiell beide Teilsysteme lesend und/oder schreibend zugreifen. Eines der beiden Teilsysteme ist bezüglich der an das System angeschlossenen Peripherie führend. Dies bedeutet, dass Ausgaben zu Peripherieeinheiten bzw. Ausgangsinformationen für diese Peripherieeinheiten nur von einem der beiden Teilsysteme durchgeführt werden, welches als Master arbeitet bzw. die Masterfunktion übernommen hat. Damit beide Teilsysteme synchron ablaufen können, werden diese über die Synchronisationsverbindung in regelmäßigen Abständen synchronisiert. Bezüglich der Häufigkeit der Synchronisation und deren Umfang können verschiedene Ausprägungen unterschieden werden (warmstandby, hot-standby).

Darüber hinaus muss auch gewährleistet sein, dass im Rahmen der Überführung der Prozesssteuerung von einem Solo- bzw. nicht-redundanten Betrieb in einen redundanten Betrieb, z.B. nach dem Austausch eines ausgefallenen Teilsystems, diese Überführung bzw. dieser Übergang stoßfrei bewerkstelligt wird.

Im Rahmen einer derartigen Überführung, ist es erforderlich, relevante Daten von dem bisher prozessführenden Teilsystem auf das neu bzw. zusätzlich angeschlossene bzw. aufgeschaltete Teilsystem zu übertragen. Im Rahmen dieser als Ankoppeln und Aufdaten bezeichneten Überführung während einer sogenannten Ankoppeln- und Aufdat-Phase (AuA-Phase) darf der zu steuernde technische Prozess bzw. die Prozesssteuerung nicht störend beeinflusst werden, die Prozesssteuerung muss während dieser AuA-Phase - im Folgenden der Einfachheit halber Aufdat-Phase genannt - störungsfrei weiterlaufen.

Aus der EP 2 667 269 B1 ist ein Verfahren zum Betreiben eines redundanten Automatisierungssystems bekannt. Die EP 2 657 797 B1 stellt ebenfalls ein Verfahren zum Betreiben eines redundanten Automatisierungssystems vor.

Bei einer Synchronisierung werden alle Zustands-relevanten Daten von einer aktuell noch laufenden SPS auf die SPS übertragen, die in das redundante System integriert werden soll. Zu diesen Zustandsinformationen gehören auch persistente Daten, die üblicherweise in Dateien auf einem Dateisystem abgelegt sind. Diese persistenten Daten werden vom Steuerungsprogramm laufend verändert, wenn z.B. neue Logging-Daten auf dem Dateisystem abgelegt werden sollen. Eine Datenerfassung muss lückenlos erfolgen, auch während der Synchronisierung bei dem die gleichen Daten laufend verändert und mit der neu hinzugefügten SPS synchronisiert werden müssen.

Bei den bisher bekannten Verfahren oder Geräten wird der schreibende Zugriff auf diese persistenten Daten während des Syncup-Vorgangs gesperrt und die Daten werden auf die neu hinzugefügte SPS kopiert. Schreibender Zugriff ist für das Steuerungsprogramm erst nach Abschluss des Synchronisierungs- bzw. des Aufdat-Vorgangs wieder möglich.

Es ist demnach von Nachteil, dass die im ersten Teilsystem gespeicherten Zustandsinformationen, insbesondere aktuelle dynamische Laufzeitdaten verloren gehen können bzw. aufwändig zwischengespeichert werden müssen.

Es ist Aufgabe der vorliegenden Erfindung diesen Nachteil zu beseitigen.

Die Aufgabe wird dadurch gelöst, dass das erste Datenabgleichmittel eine erste Datei und eine zweite Datei aufweist, das erste Datenabgleichmittel dazu ausgestaltet ist während einer Datensammelphase die Zustandsinformationen sowohl in die erste Datei als auch in die zweite Datei zu schreiben, das erste Datenabgleichmittel die dynamische Laufzeitdaten durch Schreibzugriffe auf die erste Datei und die zweite Datei aktuell hält, das erste Datenabgleichmittel ausgestaltet ist während der Datensammelphase zu überwachen, dass weder ein Schreibzugriff auf die erste Datei noch ein Schreibzugriff auf die zweite Datei fehlschlägt und für den Fall, dass ein Schreibzugriff fehlgeschlagen ist, werden beide Schreibzugriffe für ungültig erklärt, das erste Datenabgleichmittel dazu ausgestaltet ist zu Beginn einer Synchronisationsphase die zweite Datei für weitere Schreibzugriffe zu sperren und schreibende Zugriffe nur noch auf die erste Datei zuzulassen, weiterhin die gesperrte zweite Datei zum zweiten Teilsystem zu übertragen, das erste Datenabgleichmittel ausgestaltet ist, die weiteren Schreibzugriffe auf die erste Datei in einer ersten Aufzeichnungsdatei chronologisch zu speichern, das zweite Teilsystem eine zweite Aufzeichnungsdatei aufweist, und dass das erste Datenabgleichmittel ausgestaltet ist, ebenfalls die weiteren Schreibzugriffe auf die erste Datei in die zweite Aufzeichnungsdatei (T2) zu speichern, das erste Datenabgleichmittel dazu ausgestaltet ist nach einer Bestätigung der erfolgreichen Datenübertragung der gesperrten zweiten Datei zum zweiten Teilsystem eine Abschlussphase zu starten in der die in der ersten Aufzeichnungsdatei gespeicherten Änderungen in die zweite Datei auf dem ersten Teilsystem eingepflegt werden, das zweite Datenabgleichmittel dazu ausgestaltet ist die in der zweiten Aufzeichnungsdatei gespeicherten Änderungen in eine erste Datei und in eine zweite Datei auf dem zweiten Teilsystem einzupflegen, das erste Datenabgleichmittel dazu ausgestaltet ist, so lange noch nicht alle Änderungen aus der ersten Aufzeichnungsdatei abgearbeitet wurden, schreibende Zugriffe auf die erste Datei weiterhin in die erste Aufzeichnungsdatei zu speichern und wenn alle Änderungen aus der der ersten Aufzeichnungsdatei eingepflegt wurden wieder in die Datensammelphase überzugehen.

Die Datenerfassung kann nun lückenlos erfolgen, denn auch während der Synchronisationsphase werden die Daten weiterhin erfasst und in der Abschlussphase werden die Daten, welche zuvor ohne die Erfindung verlorengegangen wären, nach und nach wieder in das System eingebettet. Eine der beiden Teilsysteme befindet sich zunächst in einem Solobetrieb. Schreibende Zugriffe auf persistente Daten werden derart ausgeführt, dass neben der eigentlichen Datei, also der ersten Datei, jetzt auch eine Kopie der persistenten Daten nämlich die zweite Datei geführt wird. Schreibende Zugriffe werden also doppelt ausgeführt. Der schreibende Zugriff ist nur dann erfolgreich, wenn beide Zugriffe auf die erste Datei und die zweite Datei durchgeführt werden können. Schlägt einer der beiden Zugriffe oder beide Zugriffe fehl, schlägt auch der schreibende Zugriff als Ganzes fehl. Schreibende Zugriffe werden auf dem ersten Teilsystem während der Synchronisationsphase nur noch auf die erste Datei durchgeführt. Lesende Zugriffe werden ebenfalls aus der ersten Datei des ersten Teilsystems versorgt. Bei lesenden Zugriffen wird das zweite Teilsystem mit den Daten des ersten Teilsystems aus der ersten Datei versorgt. Das zweite Teilsystem führt zunächst keine schreibenden Zugriffe auf die erste Datei und die zweite Datei aus.

Weiterhin ist vorgesehen, dass das erste Teilsystem die Prozessführung durchführt und bei einen möglichen Fehler oder einem Ausfall des ersten Teilsystems das zweite Teilsystem die Prozessführung übernimmt, weiterhin ausgestaltet, dass das ausgefallene oder fehlerbehafte erste Teilsystem nach einer Fehlerkorrektur oder einem Austausch mit Zustandsinformationen von dem noch laufenden zweiten Teilsystem aktualisiert wird, um wieder synchron mit seinem Steuerprogramm zu dem Steuerprogramm des zweiten Teilsystems zu arbeiten um bei einem erneuten Ausfall des jeweiligen Teilsystems die Prozessführung zu übernehmen.

Um einen späteren Nachlauf zu verringern, wird ergänzend zur Synchronisation mit einer Aufdat-Phase gearbeitet. Bei der Überführung der Prozesssteuerung von einem Solo- bzw. nicht-redundanten Betrieb in einen redundanten Betrieb, z.B. nach dem Austausch eines ausgefallenen Teilsystems, soll diese Überführung bzw. dieser Übergang möglichst stoßfrei bewerkstelligt werden. Im Rahmen einer derartigen Überführung ist es erforderlich, relevante Daten von dem bisher prozessführenden Teilsystem auf das neu bzw. zusätzlich angeschlossene bzw. aufgeschaltete Teilsystem zu übertragen. Im Rahmen dieser als Ankoppeln und Aufdaten bezeichneten Überführung während einer sogenannten Ankoppeln- und Aufdat-Phase (AuA-Phase) darf der zu steuernde technische Prozess bzw. die Prozesssteuerung nicht störend beeinflusst werden, die Prozesssteuerung muss während dieser AuA-Phase - im Folgenden der Einfachheit halber Aufdat-Phase genannt - störungsfrei weiterlaufen.

Dazu ist das Redundantes Automatisierungssystem ausgestaltet zum Überführen der Prozesssteuerung von einem Solobetrieb eines der Teilsysteme in einen redundanten Steuerbetrieb mit dem anderen Teilsystem, wobei das eine Teilsystem ausgestaltet ist, dem anderen Teilsystem die zweite Datei fragmentiert im Rahmen einer Aufdat-Phase über die Synchronisationsverbindung zu übermitteln und Prozesseingangswerte sowie Freigaben des einen Teilsystems zwischenzuspeichern, wobei die Freigaben anzeigen, welche Verarbeitungsabschnitte des Steuerprogramms das eine Teilsystem bereits verarbeitet hat, dabei ist das andere Teilsystem ferner dazu ausgebildet ist, nach dem Empfang der zweiten Datei freigegebene Verarbeitungsabschnitte eines Steuerprogramms, welche den Verarbeitungsabschnitten des Steuerprogramms des einen Teilsystems entsprechen, unter Berücksichtigung der zwischengespeicherten Prozesseingangswerte mit einem zeitlichen Nachlauf zu verarbeiten, wobei das Automatisierungssystem dazu ausgebildet ist, zur Verringerung des zeitlichen Nachlaufs der Verarbeitung auf einen vorgegebenen Wert die Verarbeitungsabschnitte des Steuerprogramms relativ zur Verarbeitung der Verarbeitungsabschnitte des Steuerprogramms schneller zu verarbeiten.

Um eine Kommunikationslast zu verringern ist das Redundante Automatisierungssystem dazu ausgestaltet, dass das erste Datenabgleichmittel die zweite Datei für die fragmentierte Übertragung in Datenstücke zerlegt, wobei die Größe dieser Datenstücke so gewählt ist, dass sie eine Reaktionsfähigkeit des ersten Teilsystems aufgrund der zusätzlichen Last für die Datenübertragung nicht negativ beeinflusst.

Auch wird die eingangs genannte Aufgabe durch ein Verfahren zum Betreiben eines redundanten Automatisierungssystems gelöst, wobei ein erstes Teilsystem und ein zweites Teilsystem zur Steuerung eines technischen Prozesses jeweils ein Steuerprogramm verarbeiten, wobei das erste Teilsystem mit einem ersten Steuerprogramm den Prozess führt und das zweite Teilsystem synchron ein zweites Steuerprogramm abarbeitet um bei einem Ausfall eines der beiden Teilsysteme, das jeweils ausgefallene oder fehlerbehafte Teilsysteme nach einer Fehlerkorrektur oder einem Austausch mit Zustandsinformationen von dem noch laufenden Teilsystem über ein Datenabgleichmittel aktualisiert wird, um wieder synchron mit seinem Steuerprogramm zu arbeiten um bei einem erneuten Ausfall des jeweiligen Teilsystems die Prozessführung zu übernehmen, wobei die Zustandsinformationen statische Konfigurationsdaten und dynamische Laufzeitdaten umfassen, wobei eine erste Datei und eine zweite Datei im ersten Teilsystem angelegt wird, ein erstes Datenabgleichmittel im ersten Teilsystem eine Datensammelphase startet, in welcher die Zustandsinformationen sowohl in die erste Datei als auch in die zweite Datei geschrieben werden, das erste Datenabgleichmittel die dynamische Laufzeitdaten durch Schreibzugriffe auf die erste Datei und die zweite Datei aktuell hält, das Datenabgleichmittel während der Datensammelphase überwacht, das weder ein Schreibzugriff auf die erste Datei noch ein Schreibzugriff auf die zweite Datei fehlschlägt und für den Fall, dass ein Schreibzugriff fehlgeschlagen ist, werden beide Schreibzugriffe für ungültig erklärt, das erste Datenabgleichmittel startet im Anschluss an die Datensammelphase eine Synchronisationsphase und zu Beginn der Synchronisationsphase wird die zweite Datei für weitere Schreibzugriffe gesperrt und schreibende Zugriffe werden nur noch auf die erste Datei zugelassen, weiterhin wird die gesperrte erste Datei zum zweiten Teilsystem übertragen, dabei werden mittels des ersten Datenabgleichmittel die weiteren Schreibzugriffe auf die erste Datei in einer ersten Aufzeichnungsdatei chronologisch abgespeichert, im zweiten Teilsystem wird in eine zweite Aufzeichnungsdatei über das erste Datenabgleichmittel ebenfalls die weiteren Schreibzugriffe auf die erste Datei in die zweite Aufzeichnungsdatei geschrieben, nach einer Bestätigung der erfolgreichen Datenübertragung der gesperrten zweiten Datei zum zweiten Teilsystem wird über das erste Datenabgleichmittel eine Abschlussphase gestartet, in welcher die in der ersten Aufzeichnungsdatei gespeicherten Änderungen in die zweite Datei auf dem ersten Teilsystem eingepflegt werden, mittels des zweiten Datenabgleichmittels werden die in der zweiten Aufzeichnungsdatei gespeicherten Änderungen in eine erste Datei und in eine zweite Datei auf dem zweiten Teilsystem eingepflegt, mit dem ersten Datenabgleichmittel werden solange noch nicht alle Änderungen aus der der ersten Aufzeichnungsdatei eingepflegt wurden die schreibenden Zugriffe auf die auf erste Datei weiterhin in der ersten Aufzeichnungsdatei gespeichert und wenn alle Änderungen aus der ersten Aufzeichnungsdatei eingepflegt wurden, wird wieder in die Datensammelphase übergegangen.

Die bisher eingesetzten Verfahren, sperren den schreibenden Zugriff während des Syncup-Vorgangs bzw. Aufdat-Vorgangs. Das in dieser Erfindung dargelegte Verfahren erlaubt es dem Steuerungsprogramm auch während des Syncup-Vorgangs schreibend auf die persistenten Daten zuzugreifen. Der Vorteil liegt in der lückenlosen Erfassung der persistenten Daten auch während des Syncup-Vorgangs. Das Steuerungsprogramm muss deshalb kein besonderes Verhalten für den Syncup-Vorgang implementieren (z.B. Zwischenspeicherung der Daten), was die Realisierung des Steuerungsprogramms vereinfacht und den Testaufwand reduziert.

Damit Parameter (z.B. Reglerparameter, Positionswerte, Grenzwerte) über NETZ-AUS und Neustart eines Teilsystems hinweg erhalten bleiben, müssen diese vorher persistent gesichert werden. Die Parameter können als remanente Daten oder mit den Schreibfunktionen einer SPS beispielsweise in einer CSV-Datei gesichert werden.

Im Sinne der Erfindung versteht man unter Persistenz in der Informatik die Eigenschaft eines Systems, den Zustand seiner Daten, seines Objektmodells und/oder seiner logischen Verbindungen über lange Zeit, insbesondere über einen geplanten oder ungeplanten Programmabbruch hinaus, bereitzuhalten. Dafür wird ein nichtflüchtiges Speichermedium benötigt; auch das Dateisystem oder eine Datenbank sowie eine durch Protokolle gesicherte bidirektionale und transaktionsorientierte Datenübertragung können als nicht-flüchtiges Medium betrachtet werden. Da ein Programm jederzeit unvorhergesehen unterbrochen werden kann, bedeutet persistente Datenhaltung insbesondere, dass jede Zustandsänderung der Daten sofort auf dem nichtflüchtigen Medium gespeichert werden muss.

Anhand der Zeichnung, in der ein Ausführungsbeispiel der Erfindung veranschaulicht ist, werden im Folgenden die Erfindung, deren Ausgestaltungen sowie Vorteile näher erläutert. Es zeigen:
- FIG 1: einen Ablauf einer zeitlich asynchronen Kopplung von zwei Teilsystemen,
- FIG 2: einen Aufdat-Ablauf,
- FIG 3: ein redundantes Automatisierungssystem,
- FIG 4: das redundantes Automatisierungssystem mit Datenabgleichmittel und
- FIG 5: einen Ablauf der Synchronisation mit der ersten und der zweiten Datei im ersten Teilsystem.

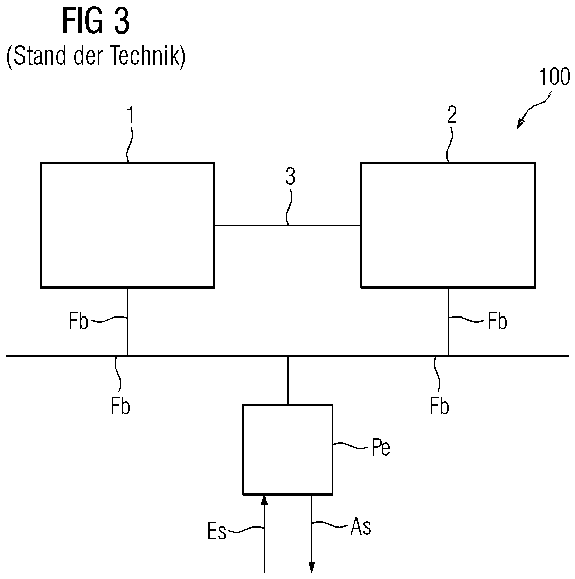

Es wird zunächst auf FIG 3 (Stand der Technik) verwiesen, in welcher ein bekanntes redundantes, zwei Teilsysteme umfassendes Automatisierungssystem 100 dargestellt ist. Ein erstes Teilsystem 1 und ein zweites Teilsystem 2 sind über einen Feldbus Fb mit einer Peripherieeinheit Pe verbunden. Dabei genügt der Feldbus Fb beispielsweise der PROFINET IO-Spezifikation. Prinzipiell sind auch andere Bussysteme, z.B. Ethernet, Fieldbus, Modbus, PROFI BUS oder aber auch parallele Bussysteme geeignet. Die Peripherieeinheit Pe erhält über Eingangsleitungen Es Signale von Messumformern oder Messwertgebern, die zur Erfassung eines Prozesszustands dienen, und gibt über Ausgangsleitungen As Signale an Stellglieder aus, mit welchen der Prozess beeinflusst wird. Der Prozess sowie die Messumformer, Messwertgeber und Stellglieder sind in der Figur der Übersichtlichkeit wegen nicht dargestellt. Die beiden Teilsysteme 1,2 arbeiten zyklisch und synchron dasselbe Steuerprogramm ab. Zu ihrer Synchronisation ist eine Synchronisationsverbindung 3 vorgesehen, wobei die Redundanz- und Überwachungsfunktionen über diese Synchronisationsverbindung 3 verwirklicht werden.

Wie erläutert, arbeitet ab einem Zeitpunkt, zu welchem eine Aufdat-Phase abgeschlossen ist, das Automatisierungssystem 100 in einer redundanten Betriebsart und im Hinblick auf die Prozesssteuerung ist ein Teilsystem 1,2 von dem Solobetrieb in den redundanten Betrieb mit einem weiteren Teilsystem überführt. Ab diesem Zeitpunkt durchlaufen beide Teilsysteme 1,2 ereignissynchron gleiche Programmpfade, z.B. aufgrund eines Ereignisses in Form eines Prozessalarms, wobei der Durchlauf mittels des ersten Teilsystems 1 und der Durchlauf mittels des zweiten Teilsystems 2 vorzugsweise zeitlich asynchron erfolgten.

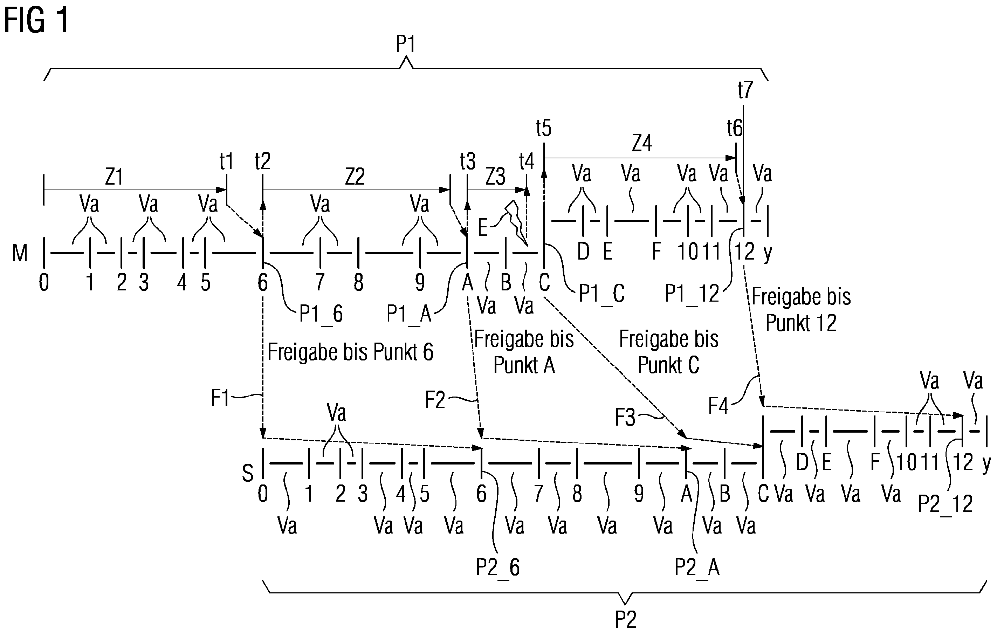

Zur Erläuterung einer ereignissynchronen Verarbeitung der Steuerprogramme P1,P2 und zum besseren Verständnis der Erfindung wird dazu im Folgenden auf FIG 1 verwiesen, in welcher ein vorgeschlagener Ablauf einer zeitlich asynchronen Kopplung von den zwei Teilsystemen 1,2 dargestellt wird. Eine "ereignissynchrone Verarbeitung" bedeutet in diesem Zusammenhang, dass sowohl der Master als auch der Slave aufgrund eines Ereignisses gleiche Programmpfade des jeweiligen Steuerprogramms durchlaufen, wobei die Durchläufe zeitlich asynchron erfolgen.

Es wird angenommen, dass eines der Teilsysteme 1,2 als Master M und eines der Teilsysteme 1,2 als Slave S bzw. als Reserve betrieben wird. Der Master M ist daher im Hinblick auf die Steuerung eines technischen Prozesses führend und übernimmt die Prozesssteuerung, wobei der Master M die Prozesseingangsinformationen bzw. Prozesseingangswerte von der Peripherieeinheit Pe (FIG 3) liest und zeitlich asynchron dem Slave S bereitstellt. Der Slave S übernimmt nur dann die Masterfunktion bzw. die Masterschaft, falls der Master M aufgrund einer Störung ausfällt.

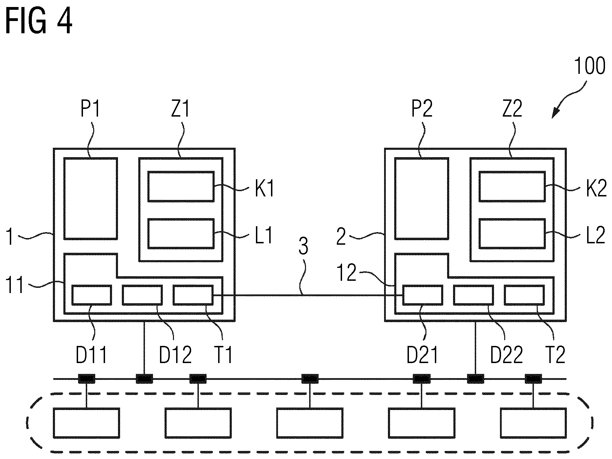

Der Master M verarbeitet ein Programm P1 zur Steuerung des technischen Prozesses, wobei auch der Slave S ein diesem ersten Steuerprogramm P1 entsprechendes zweites Steuerprogramm P2 verarbeitet. Beide Steuerprogramme P1,P2 weisen eine Vielzahl von Verarbeitungsabschnitten Va unterschiedlicher Zeitdauer auf, wobei die Steuerprogramme P1,P2 an dem jeweiligen Beginn und dem jeweiligen Ende jedes Verarbeitungsabschnittes Va unterbrechbar sind. Beginn und Ende eines jeden Verarbeitungsabschnittes Va, welcher gewöhnlich eine Vielzahl von Programmcodes umfasst, repräsentieren somit unterbrechbare Programm- bzw. Unterbrechungsstellen 0, 1, 2, ... y. An diesen Unterbrechungsstellen 0, 1, 2, ... y kann bei Bedarf das jeweilige Steuerprogramm P1, P2 mittels des Masters M und des Slaves S unterbrochen werden, um nach dem Auftreten eines Ereignisses bzw. eines Prozessalarms geeignete Reaktionen einleiten zu können. Ferner kann an diesen Unterbrechungsstellen 0, 1, 2, ... y das jeweilige Steuerprogramm P1, P2 unterbrochen werden, damit der Master M und der Slave S Freigaben, Quittungen oder sonstige Informationen über den Feldbus Fb oder über die Synchronisationsverbindung Sv (FIG 4) austauschen können. Nach Ablauf eines jeweiligen vorgebbaren bzw. vorgegebenen Zeitintervalls Zi, i= 1, 2, ... und zum jeweiligen Zeitpunkt des Auftretens einer nach Ablauf des jeweiligen Zeitintervalls Zi folgenden Unterbrechungsstelle - vorzugsweise der ersten auf das jeweilige Zeitintervall Zi folgenden Unterbrechungsstelle -, übermittelt der Master M dem Slave S eine Freigabe bzw. ein Freigabesignal, welches dem Slave S anzeigt, bis zu welchem Verarbeitungsabschnitt Va der Slave S das Steuerprogramm P2 verarbeiten darf. Diese Verarbeitungsabschnitte Va des Steuerprogramms P2 entsprechen denen, die der Master M bereits während der Verarbeitung des Steuerprogramms P1 verarbeitet hat.

Im vorliegenden Ausführungsbeispiel wird angenommen, dass nach Ablauf eines Zeitintervalls Z1 zu einem Zeitpunkt t1 und zu einem Zeitpunkt t2, zu welchem eine erste Unterbrechungsstelle P1_6 (Unterbrechungsstelle 6) auf das Zeitintervall Z1 folgt, der Master M dem Slave S eine Freigabe F1 übermittelt.

Diese Freigabe F1 umfasst die Information für den Slave S, dass dieser sein zu verarbeitendes Steuerprogramm P2 bis zu einer Unterbrechungsstelle P2_6 (Unterbrechungsstelle 6) verarbeiten darf, wobei die Unterbrechungsstelle P2_6 des Steuerprogramms P2 der Unterbrechungsstelle P1_6 des Steuerprogramms P1 entspricht. Dies bedeutet, dass aufgrund der Freigabe der Slave S die Verarbeitungsabschnitte Va des Steuerprogramms P2 verarbeiten kann, welche den Verarbeitungsabschnitten Va des Steuerprogramms P1 bis zum Zeitpunkt der Erzeugung der Freigabe bzw. des Freigabesignals entsprechen, wobei im Beispiel der Einfachheit halber angenommen wird, dass der Zeitpunkt der Erzeugung der Freigabe dem Zeitpunkt der Übermittlung der Freigabe zum Slave S entspricht. Die Verarbeitung dieser Verarbeitungsschritte Va mittels des Slaves S erfolgt also zeitlich asynchron zur Verarbeitung der entsprechenden Verarbeitungsabschnitte Va mittels des Masters M, wobei nach der Verarbeitung der Verarbeitungsabschnitte Va des Steuerprogramms P2 durch den Slave S eine Bearbeitung von weiteren Verarbeitungsabschnitten Va durch den Slave S nur dann erfolgt, wenn der Master M dem Slave S eine weitere Freigabe übermittelt.

Der Zeitpunkt des Auftretens dieser Unterbrechungsstelle P1_6, P2_6 (Unterbrechungsstelle 6) repräsentiert den Beginn eines auf das Zeitintervall Z1 folgenden Zeitintervalls Z2.

In der beschriebenen Art und Weise erfolgt die weitere zeitlich asynchrone Verarbeitung der Steuerprogramme P1, P2. Zu einem Zeitpunkt t3 des Auftretens einer ersten Unterbrechungsstelle P1_A nach Ablauf des Zeitintervalls Z2 übermittelt der Master M dem Slave S eine weitere Freigabe F2, die dem Slave S anzeigt, dass dieser weitere Verarbeitungsabschnitte Va bis zu der Unterbrechungsstelle P2_A bearbeiten kann. Diese Verarbeitungsabschnitte Va entsprechen wiederum denen, welche der Master M bereits vom Zeitpunkt t2 bis zum Zeitpunkt t3, also bis zur Unterbrechungsstelle P1_A, verarbeitet hat. Dies bedeutet, dass der Slave S die Verarbeitungsabschnitte Va von dem Zeitpunkt t2 der vorigen Freigabe F1 bis zum Zeitpunkt t3 der aktuellen Freigabe F2 verarbeitet. Der Zeitpunkt t3, zu welchem die erste Unterbrechungsstelle P1_A nach Ablauf des Zeitintervalls Z2 aufgetreten ist, ist der Beginn eines auf das Zeitintervall Z2 folgenden Zeitintervalls Z3.

Es kann nun vorkommen, dass während eines Zeitintervalls ein Ereignis, z.B. ein Ereignis in Form eines Prozessalarms, auftritt. Im Ausführungsbeispiel ist mit E ein derartiges Ereignis bezeichnet, auf welches der Master M während des Zeitintervalls Z3 zu einem Zeitpunkt t4 geeignet nach Maßgabe des Steuerprogramms P1 reagieren muss. In diesem Fall übermittelt der Master M dem Slave S eine Freigabe F3 nicht zu einem Zeitpunkt des Auftretens einer nach dem Zeitintervall Z3 folgenden Unterbrechungsstelle nach dem Zeitintervall Z3, sondern zu einem Zeitpunkt t5 des Auftretens einer auf das Auftreten des Ereignisses E folgenden Unterbrechungsstelle P1_C (Unterbrechungsstelle C). Dies bedeutet, dass das Zeitintervall Z3 aufgrund des Ereignisses E verkürzt wird, wobei der Zeitpunkt t5 der Beginn eines folgenden Zeitintervalls Z4 ist. Aufgrund der dem Slave S übermittelten Freigabe F3 verarbeitet der Slave S die Verarbeitungsabschnitte Va des Steuerprogramms P2, welche den Verarbeitungsabschnitten Va des ersten Steuerprogramms P1 entsprechen, welche der Master M zwischen den Zeitpunkten t3 und t5 bereits verarbeitet hat.

Aufgrund des Ereignisses E verarbeitet der Master M während des Zeitintervalls Z4 Verarbeitungsabschnitte Va höherer Priorität, z.B. vollzieht der Master M einen Threadwechsel zum Zeitpunkt t5, und übermittelt wiederum nach Ablauf des Zeitintervalls Z4 zum Zeitpunkt t6 eine Freigabe F4 zu einem Zeitpunkt t7, zu welchem eine erste auf das Zeitintervall Z4 folgende Unterbrechungsstelle P1_12 (Unterbrechungsstelle 12) auftritt. Aufgrund dieser Freigabe verarbeitet der Slave S ebenfalls Verarbeitungsabschnitte Va bis zu einer Unterbrechungsstelle P2_12 (Unterbrechungsstelle 12) des Steuerprogramms P2, wobei diese Verarbeitungsabschnitte Va den Verarbeitungsabschnitten Va des Steuerprogramms P1 zwischen den Zeitpunkten t5 und t7 entsprechen und wobei der Slave S ebenfalls einen Threadwechsel vollzieht.

Wie erläutert, versetzen die Freigaben des Masters M den Slave S in die Lage, das gleiche "Threadgebirge" wie der Master M zu durchlaufen, was bedeutet, dass der Slave S einen "Threadwechsel" an einer Stelle im Steuerprogramm P2 vornimmt, die der Stelle im Steuerprogramm P1 entspricht. Der Slave S setzt seine Bearbeitung nur dann fort, wenn dieser dazu vom Master M durch eine Freigabe aufgefordert wird. Im Hinblick auf die Verarbeitung der Verarbeitungsabschnitte verarbeitet der Master M diese in Echtzeit wie in einem Stand-Alone- bzw. wie in einem nicht-redundanten Betrieb und erteilt in regelmäßigen Zeitabständen sowie nach Auftreten von Ereignissen Freigaben zur Verarbeitung entsprechender Verarbeitungsabschnitte durch den Slave S, wobei der Master M weiter das erste Steuerprogramm P1 verarbeitet und nicht aktiv auf eine Antwort des Slaves S wartet. Der Slave S läuft bezüglich der Verarbeitung der entsprechenden Verarbeitungsabschnitte dem Master M nach und verarbeitet diese aufgrund der erteilten Master-Freigaben.

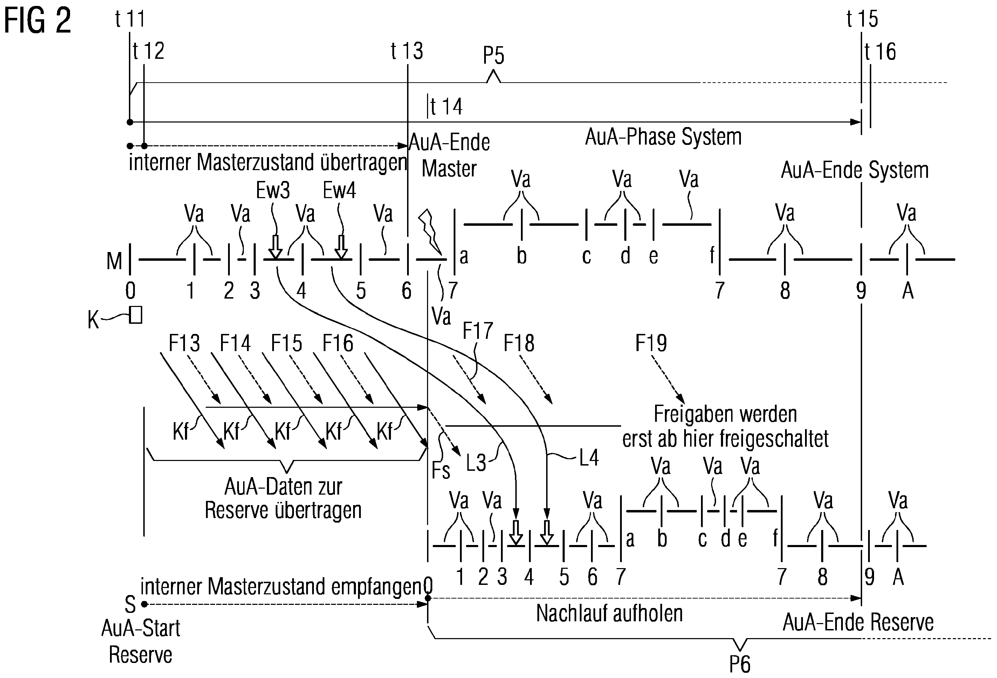

Im Folgenden wird angenommen, dass die Prozesssteuerung von einem Solobetrieb des Masters M in einen redundanten Steuerbetrieb mit dem Slave S überzuführen ist. Eine derartige Überführung ist z.B. dann erforderlich, wenn der Slave S nach einer Reparatur wieder an den Master M angekoppelt wird. Dazu wird auf FIG 2 verwiesen, in welcher ein Aufdat-Ablauf des Automatisierungssystems 100 dargestellt ist.

Diese Überführung beginnt zu einem Zeitpunkt t11, bis zu dem der Master M erkannt hat, dass der Slave S an den Feldbus Fb (FIG 3) angekoppelt ist, wobei ab diesem Zeitpunkt t11 die Aufdat-Phase sowohl des Masters M als auch des Slaves S beginnt. Der Master M erstellt ab diesem Zeitpunkt t11 eine lokale Kopie K aller relevanten Daten, welche seinen internen Zustand bis zu diesem Zeitpunkt t11 repräsentiert, wobei der Master M weiterhin im Solobetrieb den technischen Prozess steuert und Verarbeitungsabschnitte Va eines Steuerprogramms P5 verarbeitet. Ab einem Zeitpunkt t12 bis zu einem Zeitpunkt t13, zu dem die Aufdat-Phase des Masters M abgeschlossen ist, übermittelt der Master M dem Slave S fragmentiert diese Kopie K - was in der Zeichnung mittels Pfeilen Kf angedeutet ist -, die der Slave S bis zu einem Zeitpunkt t14 vollständig empfangen hat. Zu diesem Zeitpunkt t14 weist nun der Slave S den gleichen internen Zustand wie der Master zum Zeitpunkt t11 auf. Ab dem Zeitpunkt t12 werden ferner alle Freigaben des Master M sowie alle vom Master M von der Peripherieeinheit Pe (FIG 3) eingelesenen Prozesseingangswerte auf dem Master M, dem Slave S oder einem weiteren Teilsystem des Automatisierungssystems zwischengespeichert, wobei diese Freigaben für eine Bearbeitung durch den Slave S erst nach dem vollständigen Empfang der Kopie K freigeschaltet werden. Im vorliegenden Ausführungsbeispiel wird angenommen, dass während eines Zeitabschnitts ab dem Zeitpunkt t11 bis zum Zeitpunkt t13, zu welchem die Übertragung der Kopie K abgeschlossen ist, der im Solobetrieb laufende Master M Freigaben F13, F14, F15, F16 erzeugt und ferner Prozesseingangswerte Ew3, Ew4 eingelesen hat. Diese Freigaben F13 bis F16 und diese Prozesseingangswerte Ew3, Ew4 werden dem Slave S erst ab einem Zeitpunkt t14, also zu dem Zeitpunkt, zu welchem der interne Zustand des Masters M vollständig dem Slave S bereitgestellt ist, freigeschaltet, was in der Figur durch einen Pfeil Fs und durch geschwungene Linien L3, L4 angedeutet ist. Nach dieser Freischaltung durch den Master M führt der Slave S sich an den internen Zustand des Master Ms heran, indem der Slave S nach Maßgabe der Freigaben F13 bis F16 die Daten der Kopie K verarbeitet. Dabei verarbeitet der Slave S die Verarbeitungsabschnitte Va seines Steuerprogramms P6, die den Verarbeitungsabschnitten Va des Steuerprogramms P5 des Masters M bis zum Zeitpunkt t13 entsprechen, wobei der Slave S im Hinblick auf die Verarbeitung des Steuerprogramms P6 die Prozesseingangswerte Ew3, Ew4 berücksichtigt.

Aufgrund dessen, dass der Slave S sich zeitlich asynchron an den internen Zustand des Masters M heranführt, läuft im Hinblick auf die Verarbeitung der entsprechenden Verarbeitungsabschnitte Va des Steuerprogramms P6 der Slave S dem Master M nach, wobei dieser zeitliche Nachlauf auf ein tolerierbares Maß verringert werden muss; denn ein zu hoher zeitliche Nachlauf kann zu einem Redundanzverlust führen. Um diesen zeitlichen Nachlauf zu vermindern, ist vorgesehen, dass die Verarbeitungsgeschwindigkeit des Slaves S relativ zur Verarbeitungsgeschwindigkeit des Masters M höher ist, was in der Figur in Form "verkürzt" dargestellter Verarbeitungsabschnitte Va im Steuerprogramm P6 dargestellt ist. Diese relative Erhöhung der Verarbeitungsgeschwindigkeit des Slaves S kann z. B. bewirkt werden, indem der Slave S die Verarbeitungsabschnitte Va seines Programms P6 schneller oder der Master M die Verarbeitungsabschnitte Va seines Programms P5 langsamer verarbeitet. Erst dann, wenn der Nachlauf aufgeholt bzw. auf ein tolerierbares Maß bzw. auf einen vorgegebenen Wert verringert wird, ist die zum Zeitpunkt t12 beginnende Aufdat-Phase des Slaves S und somit des Automatisierungssystems 100 abgeschlossen.

Im vorliegenden Ausführungsbeispiel wird angenommen, dass der Nachlauf zu einem Zeitpunkt t15 auf ein tolerierbares Maß verringert wurde. Dieses Maß ist so gewählt bzw. vorgegeben, dass im Falle eines Ausfalls des Masters M der Slave S stoßfrei die Masterschaft übernehmen kann. In der Figur repräsentiert die zeitliche Differenz zwischen einem Zeitpunkt t16 und dem Zeitpunkt t15 das tolerierbare Maß, was in einem praktischen Ausführungsbeispiel der Erfindung im Millisekundenbereich liegt. Im Rahmen der Aufdat-Phase des Slaves S bearbeitet der Slave S ab dem Zeitpunkt t14 bis zum Zeitpunkt t15 sowohl die während der Übertragung der Kopie K zwischengespeicherten Freigaben F13 bis F16 als auch Freigaben F17, F18, F19, welche der Master M dem Slave S nach dieser Übertragung übermittelt. Diese Freigaben F17 bis F19 zeigen dem Slave S an, welche Verarbeitungsabschnitte Va des Steuerprogramms P6 ferner durch den Slave S zu verarbeiten sind, wobei diese Verarbeitungsabschnitte Va den Verarbeitungsabschnitten Va des Steuerprogramms P5 entsprechen, die der Master M bereits ab dem Zeitpunkt t14 verarbeitet hat. Mit anderen Worten: Nachdem der Master M dem Slave S die Kopie vollständig übermittelt hat bzw. der Slave S diese Kopie K vollständig empfangen hat, verarbeitet der Slave S ab dem Zeitpunkt t14 bis zum Zeitpunkt t16 alle freigegebenen Verarbeitungsabschnitte Va seines Steuerprogramms P6, welche denen entsprechen, die der Master M bereits ab dem Zeitpunkt t11 bis zum Zeitpunkt t15 verarbeitet hat.

Ab dem Zeitpunkt t15 ist die Aufdat-Phase abgeschlossen und das Automatisierungssystem 100 in einen redundanten Betrieb überführt. Die Prozesssteuerung ist vom Solobetrieb des Master M ist den redundanten Betrieb mit dem Slave S übergegangen, wobei die weiteren Durchläufe der entsprechenden Programmpfade auf dem Master M und dem Slave S ab dem Zeitpunkt t16 in der beschriebenen Art und Weise zeitlich asynchron oder auch in einer an sich bekannten Art und Weise zeitlich synchron erfolgen kann.

Die FIG 4 zeigt das zuvor beschriebene Automatisierungssystem 100 mit der Erweiterung des Datenabgleichmittels 11,12, dabei weist das erste Teilsystem 1 ein erstes Datenabgleichmittel 11 und das zweite Teilsystem 2 weist ein zweites Datenabgleichmittel 12 auf. Das erste Teilsystem 1 weist zur Steuerung des technischen Prozesses das erste Steuerprogramm P1 auf und das zweite Teilsystem 2 weist ebenfalls zur Steuerung des technischen Prozesses das zweite Steuerprogramm P2 auf. Um das erste Teilsystem 1 mit dem zweiten Teilsystem 2 zu synchronisieren, ist die Synchronisationsverbindung 3 vorhanden. Im ersten Teilsystem 1 sind Zustandsinformationen Z1 gespeichert, welche statische Konfigurationsdaten K1 und dynamische Laufzeitdaten L1 umfassen. Das erste Teilsystem 1 ist mit seinem ersten Datenabgleichmittel 11 ausgestaltet zum Datenabgleich der Zustandsinformationen Z1 des ersten Teilsystems 1 mit Zustandsinformationen Z2 des zweiten Teilsystems 2, wobei das zweite Teilsystem 2 das zweite Datenabgleichmittel 12 aufweist.

Das ersten Datenabgleichmittel 11 weist eine erste Datei D11 und eine zweite Datei D12 auf. Das erste Datenabgleichmittel 11 ist dazu ausgestaltet, während einer Datensammelphase PH1 die Zustandsinformation Z1 sowohl in die erste Datei D11 als auch in die zweite Datei D12 zu schreiben. Das erste Datenabgleichmittel 11 hält die dynamischen Laufzeitdaten L1 durch Schreibzugriffe auf die erste Datei D11 und die zweite Datei D12 aktuell. Das erste Datenabgleichmittel 11 ist ausgestaltet, während der Datensammelphase PH1 zu überwachen, dass weder ein Schreibzugriff auf die erste Datei D11 noch ein Schreibzugriff auf die zweite Datei D12 fehlschlägt, und für den Fall, dass ein Schreibzugriff fehlgeschlagen ist, werden beide Schreibzugriffe für ungültig erklärt. Weiterhin ist das erste Datenabgleichmittel 11 dazu ausgestaltet, zu Beginn einer Synchronisationsphase PH2 die zweite Datei D12 für weitere Schreibzugriffe zu sperren und schreibende Zugriffe nur noch auf die erste Datei D11 zuzulassen. Sodann wird die gesperrte zweite Datei D12 zum zweiten Teilsystem 2 übertragen. Dieses Übertragen der zweiten gesperrten Datei D12 zum zweiten Teilsystem 2 entspricht dem mit FIG 2 beschriebenen Übertragen der lokalen Kopie K vom Master M zum Slave S. Um Datenverluste zu vermeiden, ist das erste Datenabgleichmittel 11 nun ausgestaltet, die weiteren Schreibzugriffe auf die erste Datei in einer ersten Aufzeichnungsdatei P1 chronologisch zu speichern. Das zweite Teilsystem 2 weist eine zweite Aufzeichnungsdatei T2 auf, und das erste Datenabgleichmittel 11 ist weiterhin dazu ausgestaltet, ebenfalls die weiteren Schreibzugriffe auf die erste Datei D11 in die zweite Aufzeichnungsdatei T2 zu speichern.

Das erste Datenabgleichmittel 11 ist dazu ausgestaltet nach einer Bestätigung der erfolgreichen Datenübertragung der gesperrten zweiten Datei D12 zum zweiten Teilsystem 2 eine Anschlussphase PH3 zu starten. In dieser Anschlussphase PH3 werden die in der ersten Aufzeichnungsdatei T1 gespeicherten Änderungen in die zweite Datei D12 auf dem ersten Teilsystem 1 eingepflegt. Das zweite Datenabgleichmittel 12 ist dazu ausgestaltet die in der zweiten Aufzeichnungsdatei T2 gespeicherten Änderungen in die erste Datei D21 und in die zweite Datei D22 auf dem zweiten Teilsystem 2 einzupflegen. Das erste Datenabgleichmittel 11 ist dazu ausgestaltet so lange noch nicht alle Änderungen aus der ersten Aufzeichnungsdatei T1 abgearbeitet wurden, schreibende Zugriffe auf die erste Datei D11 weiterhin in die erste Aufzeichnungsdatei T1 zu speichern und wenn alle Änderungen aus der ersten Aufzeichnungsdatei T1 eingepflegt wurden, wieder in die Datensammelphase PH1 überzugehen.

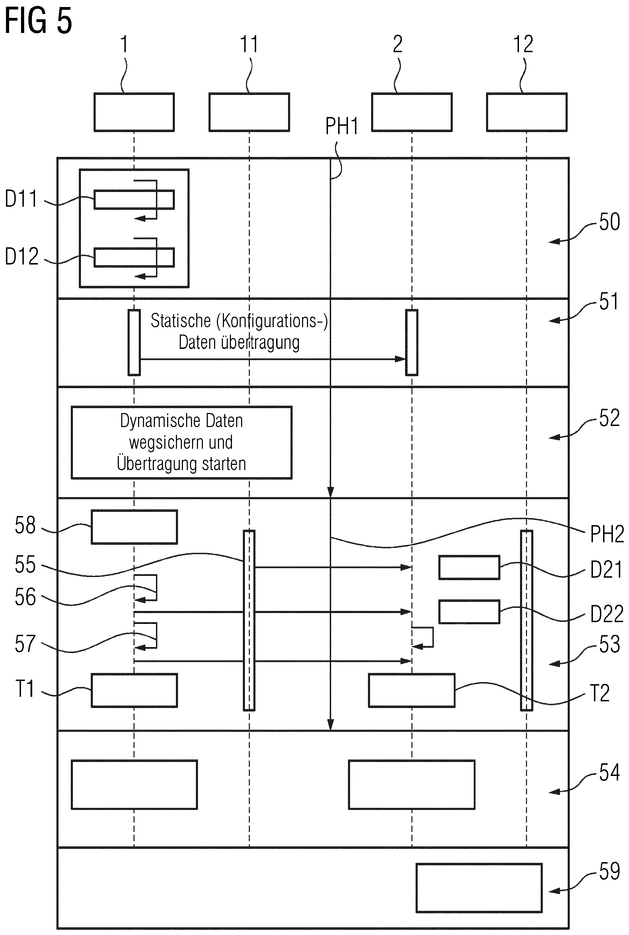

Gemäß der FIG 5 ist der verfahrensgemäße Ablauf zum "Aufdaten" bzw. Synchronisieren von dem ersten Teilsystem 1 zu dem zweiten Teilsystem 2 dargestellt. Das erste Teilsystem 1 läuft zunächst in einem Solobetrieb 50. In dem ersten Teilsystem 1 wird eine erste Datei D11 und eine zweite Datei D12 angelegt. Das erste Datenabgleichmittel 11 im ersten Teilsystem 1 startet eine Datensammelphase PH1, in welcher die Zustandsinformationen Z1 sowohl in die erste Datei D11 als auch in die zweite Datei D12 geschrieben werden. Das erste Datenabgleichmittel D11 schreibt die dynamischen Laufzeitdaten L1 auf die erste Datei D11 und die zweite Datei D12. In der Datensammelphase PH1 können bereits erste statische Konfigurationsdaten in dem Schritt Start Synchro 51 übertragen werden. Im Anschluss an die Datensammelphase PH1 wird die Synchronisationsphase PH2 gestartet. Zu Beginn der Synchronisationsphase PH2 wird die zweite Datei D12 für weitere Daten- und Schreibzugriffe in einem Sperrschritt 58 gesperrt. Schreibende Zugriffe dürfen nur noch auf die erste Datei D11 erfolgen. Die nun gesperrte zweite Datei D12 wird zum zweiten Teilsystem 2 übertragen. Damit startet die Datenübertragung 55. In dem Schritt 58 wurde die zweite Datei D12 gesperrt. Mit 56 wird symbolisiert, dass jetzt nur noch Lesezugriffe auf die erste Datei D11 und mit 57 nur noch schreibende Zugriffe auf die erste Datei D11 erfolgen können.

Mittels des ersten Datenabgleichmittels 11 werden weitere Schreibzugriffe auf die erste Datei D11 in einer ersten Aufzeichnungsdatei T1 chronologisch abgespeichert, im zweiten Teilsystem 2 werden in einer zweiten Aufzeichnungsdatei T2 über das erste Datenabgleichmittel 11 ebenfalls die weiteren Schreibzugriffe auf die erste Datei D11 in die zweite Aufzeichnungsdatei T2 geschrieben. Ist mit dem Schritt 54 die Datenübertragung abgeschlossen, wird die erfolgreiche Datenübertragung der gesperrten zweiten Datei D12 zum zweiten Teilsystem 2 bestätigt. In einer Abschlussphase PH3 werden nun die in der ersten Aufzeichnungsdatei T1 gespeicherten Änderungen in die zweite Datei D12 auf dem ersten Teilsystem 1 eingepflegt. Mittels des zweiten Datenabgleichmittels 12 werden die in der zweiten Aufzeichnungsdatei T2 gespeicherten Änderungen in die erste Datei D21 und in die zweite Datei D22 auf dem zweiten Teilsystem 2 eingepflegt. In dem Schritt 59 sind nun beide Aufzeichnungsdateien T1,T2 wieder geleert und alle Dateien bzw. aufgezeichneten Schreibzugriffe sind eingepflegt worden. Wenn alle Änderungen aus der ersten Aufzeichnungsdatei T1 eingepflegt wurden, wird wieder in die Datensammelphase PH1 übergegangen.

## Patentansprüche

1. Redundantes Automatisierungssystem (100) umfassend ein erstes Teilsystem (1) und ein zweites Teilsystem (2), welche zur Steuerung eines technischen Prozesses jeweils ein Steuerprogramm (P1,P2) aufweisen und identisch ausgestaltet sind, zwischen dem ersten Teilsystem (1) und dem zweiten Teilsystem (2) ist eine Synchronisationsverbindung (3) vorhanden,
im ersten Teilsystem (1) sind Zustandsinformationen (Z1) gespeichert, welche
- statische Konfigurationsdaten (K1) und
- dynamische Laufzeitdaten (L1) umfassen,
wobei das erste Teilsystem (1) ein erstes Datenabgleichmittel (11) ausgestaltet zum Datenabgleich der Zustandsinformationen (Z1) des ersten Teilsystems (1) mit Zustandsinformationen (Z2) des zweiten Teilsystems (2) aufweist, wobei das zweite Teilsystem (2) ein zweites Datenabgleichmittel (12) aufweist,
**dadurch gekennzeichnet, dass**
- das erste Datenabgleichmittel (11) eine erste Datei (D11) und eine zweite Datei (D12) aufweist,
- das erste Datenabgleichmittel (11) dazu ausgestaltet ist während einer Datensammelphase (PH1) die Zustandsinformationen (Z1) sowohl in die erste Datei (D11) als auch in die zweite Datei (D12) zu schreiben,
- das erste Datenabgleichmittel (11) die dynamische Laufzeitdaten (L1) durch Schreibzugriffe auf die erste Datei (D11) und die zweite Datei (D12) aktuell hält,
- das erste Datenabgleichmittel (11) ausgestaltet ist während der Datensammelphase (PH1) zu überwachen, dass weder ein Schreibzugriff auf die erste Datei (D11) noch ein Schreibzugriff auf die zweite Datei (D12) fehlschlägt und für den Fall, dass ein Schreibzugriff fehlgeschlagen ist, werden beide Schreibzugriffe für ungültig erklärt,
- das erste Datenabgleichmittel (11) dazu ausgestaltet ist zu Beginn einer Synchronisationsphase(PH2) die zweite Datei (D12) für weitere Schreibzugriffe zu sperren und schreibende Zugriffe nur noch auf die erste Datei (D11) zuzulassen, weiterhin die gesperrte zweite Datei (D12) zum zweiten Teilsystem (2) zu übertragen,
das erste Datenabgleichmittel (11) ausgestaltet ist, die weiteren Schreibzugriffe auf die erste Datei (D11) in einer ersten Aufzeichnungsdatei (T1) chronologisch zu speichern,
das zweite Teilsystem (2) eine zweite Aufzeichnungsdatei (T2) aufweist, und dass das erste Datenabgleichmittel (11) ausgestaltet ist ebenfalls die weiteren Schreibzugriffe auf die erste Datei (D11) in die zweite Aufzeichnungsdatei (T2) zu speichern,
- das erste Datenabgleichmittel (11) dazu ausgestaltet ist nach einer Bestätigung der erfolgreichen Datenübertragung der gesperrten zweiten Datei (D12) zum zweiten Teilsystem (2) eine Abschlussphase (PH3) zu starten in der die in der ersten Aufzeichnungsdatei (T1) gespeicherten Änderungen in die zweite Datei (D12) auf dem ersten Teilsystem (1) eingepflegt werden,
- das zweite Datenabgleichmittel (12) dazu ausgestaltet ist die in der zweiten Aufzeichnungsdatei (T2) gespeicherten Änderungen in eine erste Datei (D21) und in eine zweite Datei (D22) auf dem zweiten Teilsystem (2) einzupflegen,
- das erste Datenabgleichmittel (11) dazu ausgestaltet ist so lange noch nicht alle Änderungen aus der der ersten Aufzeichnungsdatei (T1) abgearbeitet wurden schreibende Zugriffe auf die erste Datei (D11) weiterhin in die erste Aufzeichnungsdatei (T1) zu speichern und wenn alle Änderungen aus der der ersten Aufzeichnungsdatei (T1) eingepflegt wurden wieder in die Datensammelphase (PH1) überzugehen.

2. Redundantes Automatisierungssystem (100) nach Anspruch 1, ausgestaltet dass das erste Teilsystem (1) die Prozessführung durchführt und bei einen möglichen Fehler oder einem Ausfall des ersten Teilsystems (1) das zweite Teilsystem (2) die Prozessführung übernimmt, weiterhin ausgestaltet, dass das ausgefallene oder fehlerbehafte erste Teilsystem (1) nach einer Fehlerkorrektur oder einem Austausch mit Zustandsinformationen (Z2) von dem noch laufenden zweiten Teilsystem (2) aktualisiert wird, um wieder synchron mit seinem Steuerprogramm (P1) zu dem Steuerprogramm (P2) des zweiten Teilsystems (2) zu arbeiten um bei einem erneuten Ausfall des jeweiligen Teilsystems (1,2) die Prozessführung zu übernehmen.

3. Redundantes Automatisierungssystem (100) nach Anspruch 1 oder 2, ausgestaltet zum Überführen der Prozesssteuerung von einem Solobetrieb eines der Teilsysteme (1,2) in einen redundanten Steuerbetrieb mit dem anderen Teilsystem (1,2), wobei das eine Teilsystem (1) ausgestaltet ist dem anderen Teilsystem (2) die zweite Datei (D12) fragmentiert im Rahmen einer Aufdat-Phase über die Synchronisationsverbindung (3) zu übermitteln und Prozesseingangswerte (Ew3,Ew4) sowie Freigaben (F13 bis F16) des einen Teilsystems (1) zwischenzuspeichern, wobei die Freigaben anzeigen, welche Verarbeitungsabschnitte (Va) des Steuerprogramms (P1) das eine Teilsystem (1) bereits verarbeitet hat, dabei ist das andere Teilsystem (2) ferner dazu ausgebildet ist, nach dem Empfang der zweiten Datei (D12) freigegebene Verarbeitungsabschnitte (Va) seines Steuerprogramms (P2), welche den Verarbeitungsabschnitten (Va) des Steuerprogramms (P1) des einen Teilsystems (1) entsprechen, unter Berücksichtigung der zwischengespeicherten Prozesseingangswerte (Ew3,Ew4) mit einem zeitlichen Nachlauf zu verarbeiten, wobei das Automatisierungssystem dazu ausgebildet ist, zur Verringerung des zeitlichen Nachlaufs der Verarbeitung auf einen vorgegebenen Wert die Verarbeitungsabschnitte (Va) des Steuerprogramms (P2) relativ zur Verarbeitung der Verarbeitungsabschnitte (Va) des Steuerprogramms (P1) schneller zu verarbeiten.

4. Redundantes Automatisierungssystem (100) nach Anspruch 3, wobei das erste Datenabgleichmittel (11) die zweite Datei (D12) für die fragmentierte Übertragung in Datenstücke zerlegt, wobei die Größe dieser Datenstücke so gewählt ist, dass sie eine Reaktionsfähigkeit des ersten Teilsystems (1) aufgrund der zusätzlichen Last für die Datenübertragung nicht negativ beeinflusst.

5. Verfahren zum Betreiben eines redundanten Automatisierungssystems, wobei ein erstes Teilsystem (1) und ein zweites Teilsystem (2) zur Steuerung eines technischen Prozesses jeweils ein Steuerprogramm (P1,P2) verarbeiten, wobei das erstes Teilsystem (1) mit einem ersten Steuerprogramm (P1) den Prozess führt und das zweite Teilsystem (2) synchron ein zweites Steuerprogramm (P2) abarbeitet, um bei einem Ausfall eines der beiden Teilsysteme (1,2) das jeweils ausgefallene oder fehlerbehafte Teilsysteme (1,2) nach einer Fehlerkorrektur oder einem Austausch mit Zustandsinformationen (Z1,Z2) von dem noch laufenden Teilsystem (1,2) über ein Datenabgleichmittel (11,12) zu aktualisieren, um wieder synchron mit seinem Steuerprogramm (P1,P2) zu arbeiten und um bei einem erneuten Ausfall des jeweiligen Teilsystems (1,2) die Prozessführung zu übernehmen, wobei die Zustandsinformationen (Z1,Z2)
- statische Konfigurationsdaten (K1,K2) und
- dynamische Laufzeitdaten (L1,L2) umfassen,
**dadurch gekennzeichnet, dass** eine erste Datei (D11) und eine zweite Datei (D12) im ersten Teilsystem (1,2) angelegt wird,
- dass ein erstes Datenabgleichmittel (11) im ersten Teilsystem (1) eine Datensammelphase (PH1) startet, in welcher die Zustandsinformationen (Z1) sowohl in die erste Datei (D11) als auch in die zweite Datei (12) geschrieben werden,
- dass erste Datenabgleichmittel (11) die dynamischen Laufzeitdaten (L1) durch Schreibzugriffe auf die erste Datei (D11) und die zweite Datei (12) aktuell hält,
- dass Datenabgleichmittel (10) während der Datensammelphase (P1) überwacht, dass weder ein Schreibzugriff auf die erste Datei (D11) noch ein Schreibzugriff auf die zweite Datei (D12) fehlschlägt und für den Fall, dass ein Schreibzugriff fehlgeschlagen ist, werden beide Schreibzugriffe für ungültig erklärt,
- dass erste Datenabgleichmittel (11) im Anschluss an die Datensammelphase (PH1) eine Synchronisationsphase (PH2) startet und zu Beginn der Synchronisationsphase (PH2) die zweite Datei (D12) für weitere Schreibzugriffe sperrt und schreibende Zugriffe nur noch auf die erste Datei (D11) zulässt, weiterhin wird die gesperrte erste Datei (D12) zum zweiten Teilsystem (2) übertragen,
dabei werden mittels des ersten Datenabgleichmittel (11) die weiteren Schreibzugriffe auf die erste Datei (D11) in einer ersten Aufzeichnungsdatei (T1) chronologisch abgespeichert, im zweiten Teilsystem (2) werden in eine zweite Aufzeichnungsdatei (T2) über das erste Datenabgleichmittel (11) ebenfalls die weiteren Schreibzugriffe auf die erste Datei (D11) in die zweite Aufzeichnungsdatei (T2) geschrieben,
- nach einer Bestätigung der erfolgreichen Datenübertragung der gesperrten zweiten Datei (D12) zum zweiten Teilsystem (2) wird über das erste Datenabgleichmittel (11) eine Abschlussphase (P3) gestartet, in welcher die in der ersten Aufzeichnungsdatei (T1) gespeicherten Änderungen in die zweite Datei (D12) auf dem ersten Teilsystem (1) eingepflegt werden,
- mittels des zweiten Datenabgleichmittels (12) werden die in der zweiten Aufzeichnungsdatei (T2) gespeicherten Änderungen in eine erste Datei (D21) und in eine zweite Datei (D22) auf dem zweiten Teilsystem (1) eingepflegt,
- mit dem ersten Datenabgleichmittel (11) werden solange noch nicht alle Änderungen aus der der ersten Aufzeichnungsdatei (T1) eingepflegt wurden die schreibenden Zugriffe auf die erste Datei (D1) weiterhin in der ersten Aufzeichnungsdatei (T1) gespeichert und wenn alle Änderungen aus der der ersten Aufzeichnungsdatei (T1) eingepflegt wurden, wird wieder in die Datensammelphase (PH1) übergegangen.

## Claims

1. Redundant automation system (100) comprising a first subsystem (1) and a second subsystem (2), which each have a control program (P1,P2) for controlling a technical process and are embodied in an identical manner, a synchronisation connection (3) is present between the first subsystem (1) and the second subsystem (2),
saved in the first subsystem (1) is status information (Z1), which comprises
- static configuration data (K1) and
- dynamic runtime data (L1),
wherein the first subsystem (1) has a first data reconciliation means (11) embodied for data reconciliation of the status information (Z1) of the first subsystem (1) with status information (Z2) of the second subsystem (2), wherein the second subsystem (2) has a second data reconciliation means (12),
**characterised in that**
- the first data reconciliation means (11) has a first file (D11) and a second file (D12),
- the first data reconciliation means (11) is embodied to write the status information (Z1) both into the first file (D11) and into the second file (D12) during a data collection phase (PH1),
- the first data reconciliation means (11) keeps the dynamic runtime data (L1) up to date by way of write accesses to the first file (D11) and the second file (D12),
- the first data reconciliation means (11) is embodied to monitor that neither write access to the first file (D11) nor write access to the second file (D12) fails during the data collection phase (PH1), and in the event that a write access fails, both write accesses are declared invalid,
- the first data reconciliation means (11) is embodied, at the start of a synchronisation phase (PH2), to lock further write accesses to the second file (D12) and to only permit write accesses to the first file (D11), furthermore to transfer the locked second file (D12) to the second subsystem (2),
the first data reconciliation means (11) is embodied to save the further write accesses to the first file (D11) in a first recording file (T1) chronologically,
the second subsystem (2) has a second recording file (T2), and the first data reconciliation means (11) is embodied to likewise save the further write accesses to the first file (D11) into the second recording file (T2),
- the first data reconciliation means (11) is embodied, after confirming the successful data transfer of the locked second file (D12) to the second subsystem (2), to start a completion phase (PH3) in which the changes saved in the first recording file (T1) are entered into the second file (D12) on the first subsystem (1),
- the second data reconciliation means (12) is embodied to enter the changes saved in the second recording file (T2) into a first file (D21) and into a second file (D22) on the second subsystem (2),
- the first data reconciliation means (11) is embodied to continue to save write accesses to the first file (D11) into the first recording file (T1) until all changes from the first recording file (T1) have been processed and, when all changes from the first recording file (T1) file have been entered, to transition back into the data collection phase (PH1).

2. Redundant automation system (100) according to claim 1, embodied such that the first subsystem (1) assumes the guiding of the process and, in the event of a possible fault or a failure of the first subsystem (1), the second subsystem (2) assumes the guiding of the process, furthermore embodied that the failed or faulty first subsystem (1), after fault correction or a replacement, is updated with status information (Z2) from the second subsystem (2) that is still running, in order for its control program (P1) to once again operate in sync with the control program (P2) of the second subsystem (2), in order to assume the guiding of the process should the respective subsystem (1,2) fail again.

3. Redundant automation system (100) according to claim 1 or 2, embodied to transfer the process control from solo operation of one of the subsystems (1,2) to redundant control operation with the other subsystem (1,2), wherein the one subsystem (1) is embodied to transmit the second file (D12) in fragmented form to the other subsystem (2) as part of an update phase via the synchronisation connection (3) and to temporarily save process input values (Ew3,Ew4) and approvals (F13 to F16) by the one subsystem (1), wherein the approvals show which processing segments (Va) of the control program (P1) the one subsystem (1) has already processed, in this case the other subsystem (2) is further embodied, after receiving the second file (D12), to process approved processing segments (Va) of its control program (P2), which correspond to the processing segments (Va) of the control program (P1) of the one subsystem (1), while taking into consideration the temporarily stored process input values (Ew3,Ew4) with a time lag, wherein the automation system is embodied to process the processing segments (Va) of the control program (P2) more quickly relative to the processing of the processing segments (Va) of the control program (P1) in order to reduce the time lag of the processing to a predefined value.

4. Redundant automation system (100) according to claim 3, wherein the first data reconciliation means (11) breaks down the second file (D12) into data pieces for the fragmented transfer, wherein the size of said data pieces is chosen such that it does not have a negative influence on a responsiveness of the first subsystem (1) due to the additional load for the data transfer.

5. Method for operating a redundant automation system, wherein a first subsystem (1) and a second subsystem (2) for controlling a technical process in each case process a control program (P1,P2), wherein the first subsystem (1) guides the process with a first control program (P1) and the second subsystem (2) processes a second control program (P2) in sync in order, in the event of a failure of one of the two subsystems (1,2), to update the subsystem (1,2) that has failed or is faulty in each case, after fault correction or a replacement, with status information (Z1,Z2) from the subsystem (1,2) that is still running via a data reconciliation means (11,12), in order to operate in sync with its control program (P1,P2) again, in order to assume the guiding of the process in the event of a repeat failure of the respective subsystem (1,2), wherein the status information (Z1,Z2) comprises
- static configuration data (K1,K2) and
- dynamic runtime data (L1,L2),
**characterised in that**
a first file (D11) and a second file (D12) are created in the first subsystem (1,2),
- a first data reconciliation means (11) in the first subsystem (1) starts a data collection phase (PH1), in which the status information (Z1) is written both into the first file (D11) and into the second file (12),
- the first data reconciliation means (11) keeps the dynamic runtime data (L1) up to date by way of write accesses to the first file (D11) and the second file (12),
- the data reconciliation means (10) monitors during the data collection phase (P1) that neither write access to the first file (D11) nor write access to the second file (d12) fails, and in the event that a write access has failed, both write accesses are declared invalid,
- the first data reconciliation means (11) starts a synchronisation phase (PH2) following the data collection phase (PH1) and, at the start of the synchronisation phase (PH2), further write accesses to the second file (D12) are locked and write accesses are only possible to the first file (D11), furthermore the locked first file (D12) is transferred to the second subsystem (2),
in this case by means of the first data reconciliation means (11) the further write accesses to the first file (D11) are saved in a first recording file (T1) chronologically,
in the second subsystem (2) the further write accesses to the first file (D11) are likewise written into a second recording file (T2) via the first data reconciliation means (11) into the second recording file (T2),
- after confirming the successful data transfer of the locked second file (D12) to the second subsystem (2), a completion phase (P3) is started via the first data reconciliation means (11) in which the changes saved in the first recording file (T1) are entered into the second file (D12) on the first subsystem (1),
- the changes saved in the second recording file (T2) are entered into a first file (D21) and into a second file (D22) on the second subsystem (1) by means of the second data reconciliation means (12),
- the write accesses to the first file (D1) continue to be saved in the first recording file (T1) by the first data reconciliation means (11) until all changes from the first recording file (T1) have been entered and, when all changes from the first recording file (T1) have been entered, there is a transition back into the data collection phase (PH1).

## Revendications

1. Système (100) redondant d'automatisation comprenant un premier système (1) partiel et un deuxième système (2) partiel, qui ont, pour la commande d'un processus technique, respectivement un programme (P1, P2) de commande et qui sont conformés de manière identique, entre le premier système (1) partiel et le deuxième système (2) partiel, il y a une liaison (3) de synchronisation, dans le premier système (1) partiel, sont mises en mémoire des informations (Z1) d'état, qui comprennent :
- des données (K1) statiques de configuration et
- des données (L1) dynamiques de temps de marche,
dans lequel le premier système (1) partiel a un premier moyen (11) d'égalisation de données conformé pour l'égalisation de données des informations (Z1) d'état du premier système (1) partiel avec des informations (Z2) d'état du deuxième système (2) partiel, dans lequel le deuxième système (2) partiel a un deuxième moyen (12) d'égalisation de données,
**caractérisé en ce que**
- le premier moyen (11) d'égalisation de données a un premier fichier (D11) et un deuxième fichier (D12),
- le premier moyen (11) d'égalisation de données est conformé pour, pendant une phase (PH1) de collecte de données, écrire les informations (Z1) d'état, tant dans le premier fichier (D11) qu'également dans le deuxième fichier (D12),
- le premier moyen (11) d'égalisation de données maintient en cours les données (L1) dynamiques de temps de marche par des accès en écriture au premier fichier (D11) et au deuxième fichier (D12),
- le premier moyen (11) d'égalisation de données est conformé pour, pendant la phase (PH1) de collecte de données, contrôler que, ni un accès en écriture au premier fichier (D11), ni un accès en écriture au deuxième fichier (D12), n'échoue et, dans le cas où un accès en écriture échoue, les deux accès en écriture sont déclarés non valables,
- le premier moyen (11) d'égalisation de données est conformé pour, au début d'une phase (PH2) de synchronisation, bloquer le deuxième fichier (D12) pour des accès supplémentaires à l'écriture et n'autoriser des accès à l'écriture que sur le premier fichier (D11), pour transmettre en outre le deuxième fichier (D12) bloqué au deuxième système (2) partiel,
le premier moyen (11) d'égalisation de données est conformé pour mettre en mémoire chronologiquement les accès supplémentaires en écriture au premier fichier (D11) dans un premier fichier (T1) d'enregistrement,
le deuxième système (2) partiel a un deuxième fichier (T2) d'enregistrement, et **en ce que** le premier moyen (11) d'égalisation de données est conformé pour mettre également en mémoire, dans le deuxième fichier (T2) d'enregistrement, les accès supplémentaires en écriture au premier fichier (D11),
- le premier moyen (11) d'égalisation de données est conformé pour, après une confirmation de la transmission réussie de données du deuxième fichier (D12) bloqué au deuxième système (2) partiel, faire débuter une phase (PH3) de fin, dans laquelle les modifications, mises en mémoire dans le premier fichier (T1) d'enregistrement sont maintenues dans le deuxième fichier (D12) sur le premier système (1) partiel,
- le deuxième moyen (12) d'égalisation de données est conformé pour maintenir, dans un premier fichier (D21) et dans un deuxième fichier (D22) sur le deuxième système (2) partiel, les modifications mises en mémoire dans le deuxième fichier (T2) d'enregistrement,
- le premier moyen (11) d'égalisation de données est conformé pour, tant que toutes les modifications provenant du premier fichier (T1) d'enregistrement n'ont pas été traitées, continuer à mettre en mémoire dans le premier fichier (T1) d'enregistrement des accès en écriture au premier fichier (D11) et, si les modifications provenant du premier fichier d'enregistrement (T1) ont été maintenues, repasser dans la phase (PH1) de collecte de données.

2. Système (100) redondant d'automatisation suivant la revendication 1, conformé de manière à ce que le premier système (1) partiel effectue la conduite du processus et, s'il se produit éventuellement une défaillance ou une panne du premier système (1) partiel, le deuxième système (2) partiel prend en charge la conduite du processus, conformé en outre de manière à ce que l'on met à jour le premier système (1) partiel en panne ou défaillant, après une correction de la défaillance ou un remplacement, par des informations (Z2) d'état du deuxième système (2) partiel, qui fonctionne encore, pour travailler à nouveau par son programme (P1) de commande en synchronisme avec le programme (P2) de commande du deuxième système (2) partiel, la conduite du processus, s'il se produit une panne renouvelée du système (1, 2) partiel respectif.

3. Système (100) redondant d'automatisation suivant la revendication 1 ou 2, conformé pour le passage de la commande de processus d'un fonctionnement en solo de l'un des systèmes (1, 2) partiel à un fonctionnement redondant de commande avec l'autre système (1, 2) partiel, dans lequel le un système (1) partiel est conformé de manière à transmettre, par la liaison (3) de synchronisation fragmentée dans le cadre d'une phase à aufdat, le deuxième fichier (D12) à l'autre système (2) partiel et à mettre en mémoire tampon des valeurs (Ew3, Ew4) d'entrée de processus, ainsi que des libérations (F13 à F16) du un système (1) partiel, dans lequel les libérations indiquent les parties (Va) de traitement du programme (P1) de commande que le un système (1) partiel a déjà traitées, l'autre système (2) partiel étant en outre constitué pour traiter, avec une poursuite dans le temps, après la réception du deuxième fichier (D12), les parties (Va) de traitement libérées de son programme (P2) de commande, qui correspondent aux parties (Va) de traitement du programme (P1) de commande du un système (1) partiel, en tenant compte des valeurs (Ew3, Ew4) d'entrée de processus mises en mémoire tampon, dans lequel le système d'automatisation est constitué pour traiter plus rapidement, pour diminuer le temps du traitement jusqu'à une valeur donnée à l'avance, les parties (Va) de traitement du programme (P2) de commande que le traitement des parties (Va) de traitement du programme (P1) de commande.

4. Système (100) redondant d'automatisation suivant la revendication 3, dans lequel le premier moyen (11) d'égalisation de données décompose le deuxième fichier (D12) pour la transmission fragmentée en pièces de données, dans lequel la dimension de ces pièces de données est choisie de manière à ne pas influencer négativement une capacité de réaction du premier système (1) partiel sur la base de la charge supplémentaire pour la transmission de données.

5. Procédé pour faire fonctionner un système redondant d'automatisation, dans lequel un premier système (1) partiel et un deuxième système (2) partiel traitent, pour la commande d'un processus technique, respectivement un programme (P1, P2) de commande, dans lequel le premier système (1) partiel conduit le processus par un premier programme (P1) de commande et le deuxième système (2) partiel élabore en synchronisme un deuxième programme (P2) de commande, afin de mettre à jour par un moyen (11, 12) d'égalisation de données, lors d'une défaillance de l'un des deux systèmes (1, 2) partiels, le système (1, 2) partiel en panne ou défaillant, après une correction de défaillance ou un remplacement par des informations (Z1, Z2) d'état du système (1, 2) partiel fonctionnant encore, afin de retravailler de manière synchrone par son programme (P1, P2) de commande et afin, lorsque lors d'une défaillance renouvelée du système (1, 2) partiel respectif, de prendre en charge la conduite du processus, dans lequel les informations (Z1, Z2) d'état comprennent
- des données (K1, K2) statiques de configuration et
- des données (L1, L2) dynamiques de temps de marche,
**caractérisé en ce que**
l'on applique un premier fichier (D11) et un deuxième fichier (D12) dans le premier système (1, 2) partiel,
- **en ce qu'**un premier moyen (11) d'égalisation de données dans le premier système (1) partiel fait débuter une phase (PH1) de collecte de données, dans laquelle on inscrit les informations (Z1) d'état, tant dans le premier fichier (D11) qu'également dans le deuxième fichier (12),
- **en ce que** le premier moyen (11) d'égalisation de données maintient en cours les données (L1) dynamiques de temps de marche par des accès en écriture au premier fichier (D11) et au deuxième fichier (12),
- le moyen (10) d'égalisation de données contrôle que, pendant la phase (P1) de collecte de données, ni un accès en écriture au premier fichier (D11), ni un accès en écriture au deuxième fichier (D12), n'échoue et, dans le cas où un accès en écriture échoue, les deux accès en écriture sont déclarés non valables,
- **en ce que** le premier moyen (11) d'égalisation de données fait débuter, à la suite de la phase (PH1) de collecte de données, une phase (PH2) de synchronisation et bloque, au début de la phase (PH2) de synchronisation, le deuxième fichier (D12) en empêchant d'autres accès en écriture et n'autorise des accès en écriture que sur le premier fichier (D11), on transmet en outre le premier fichier (D12) bloqué au deuxième système (2) partiel,
on met en mémoire chronologiquement, au moyen du premier moyen (11) d'égalisation de données, les accès supplémentaires en écriture au premier fichier (D11) dans un premier fichier (T1) d'enregistrement, dans le deuxième système (2) partiel, on écrit, dans un deuxième fichier (T2) d'enregistrement, par le premier moyen (11) d'égalisation de données, également les autres accès en écriture au premier fichier (D11), dans le deuxième fichier (T2) d'enregistrement,
- après une confirmation de la transmission avec succès des données du deuxième fichier (D12) bloqué au deuxième système (2) partiel, on fait débuter, par le premier moyen (11) d'égalisation de données, une phase (P3) de fin, dans laquelle on maintient, sur le premier système (1) partiel, les modifications dans le deuxième fichier (D12) mises en mémoire par le premier fichier (T1) d'enregistrement,
- au moyen du deuxième moyen (12) d'égalisation de données, on maintient les modifications mises en mémoire dans le deuxième fichier (T2) d'enregistrement dans un premier fichier (D21) et dans un deuxième fichier (D22) sur le deuxième système (1) partiel,
- par le premier moyen (11) d'égalisation de données, on continue à mettre en mémoire, dans le premier fichier (T1) d'enregistrement, les accès en écriture au premier fichier (D1) tant que toutes les modifications provenant du premier fichier (T1) d'enregistrement n'ont pas été encore maintenues et, lorsque toutes les modifications du premier fichier (T1) d'enregistrement ont été maintenues, on repasse à la phase (PH1) de collecte de données.
